# EUROPEAN PATENT APPLICATION

(11) **EP 1 850 561 A1**
(43) Date of publication of application: **31.10.2007**
(21) Application number: 07101691.9
(22) Date of filing: 02.02.2007
(51) Int. Cl.: H04L 29/12

(54) **Method and apparatus for generating an IPv6 unique local address**

(30) Priority: 28.04.2006 KR 20060039004
(71) Applicant: Samsung Electronics Co., Ltd., Suwon-si 442-742 Gyeonggi-do (KR)
(72) Inventor: Park, Soo-hong, Gyeonggi-do (KR); Hwang, Cheol-ju, Gyeonggi-do (KR)
(74) Representative: Benson, Christopher

(57) **Abstract**

A method and apparatus for generating an IPv6 unique local address (ULA) are provided. The method includes generating (S100) a 64-bit first value using unique information on a UPnP device used by a router; generating (S110) a modified 64-bit EUI-64 using unique information on an interface device used by the router; generating (S120) a 128-bit second value by concatenating the 64-bit first value and the modified EUI-64; generating (S130) a 160-bit third value by applying SHA-1 to the 128-bit second value; and generating (S140) a global ID by extracting 40 bits from the 160-bit third value. A global ID is generated using unique information on an UPnP device and an interface device and the IPv6 ULA is generated using the global ID, thereby generating the IPv6 ULA having uniqueness in an entire IPv6 address system without an NTP.

## Description

The present invention relates to Internet protocol version 6 (IPv6), and more particularly, to the generation of an IPv6 unique local address (ULA).

IPv6 uses an IPv6 global address, an IPv6 link local address, and the like. The IPv6 global address must be uniquely designated in an entire IPv6 address system, whereas the IPv6 link local address need only be uniquely designated in each link.

An IPv6 unique local address (ULA) is required to be uniquely designated in the entire IPv6 address system although the IPv6 unique local address is only used in a local area.

Request for comments (RFC) 4193 provides regulations for the generation of the IPv6 ULA. According to RFC 4193, the IPv6 ULA is generated using a network time protocol (NTP) and is uniquely designated in the entire IPv6 address system. The NTP is used to synchronize time of network terminals.

However, the IPv6 ULA is not generated according to RFC 4193 in a home network that does not support technology using the NTP.

According to the present invention there is provided an apparatus and method as set forth in the appended claims. Preferred features of the invention will be apparent from the dependent claims, and the description which follows.

The present invention provides a method and apparatus for generating an IPv6 unique local address (ULA) having uniqueness without need for the network time protocol (NTP).

Additional aspects and/or advantages of the invention will be set forth in part in the description which follows and, in part, will be obvious from the description, or may be learned by practice of the invention.

Aspects of the present invention also provide a computer readable recording medium storing a computer readable program for executing the method of generating an IPv6 ULA.

According to an aspect of the present invention, there is provided a method of generating an IPv6 unique local address (ULA) comprising: generating a 64-bit first value using unique information on a universal plug and play (UPnP) device used by a router; generating a modified 64-bit extended unique identifier (EUI-64) using unique information on an interface device used by the router; generating a 128-bit second value by concatenating the 64-bit first value and the modified EUI-64; generating a 160-bit third value by applying secure hash algorithm-1 (SHA-1) to the 128-bit second value; and generating a global ID by extracting 40 bits from the 160-bit third value.

According to another aspect of the present invention, there is provided an apparatus for generating an IPv6 ULA comprising: a first value generator to generate a 64-bit first value using unique information on a UPnP device used by a router; a modified EUI-64 generator to generate a modified EUI-64 using unique information on an interface device used by the router; a second value generator to generate a 128-bit second value by concatenating the 64-bit first value and the modified EUI-64; a SHA-1 application unit to generate a 160-bit third value by applying SHA-1 to the 128-bit second value; and a global ID generator to generate a global ID by extracting 40 bits from the 160-bit third value.

In addition to the example embodiments and aspects as described above, further aspects and embodiments will be apparent by reference to the drawings and by study of the following descriptions.

A better understanding of the present invention will become apparent from the following detailed description of example embodiments and the claims when read in connection with the accompanying drawings, all forming a part of the disclosure of this invention. While the following written and illustrated disclosure focuses on disclosing example embodiments of the invention, it should be clearly understood that the same is by way of illustration and example only and that the invention is not limited thereto.

For a better understanding of the invention, and to show how embodiments of the same may be carried into effect, reference will now be made, by way of example, to the accompanying diagrammatic drawings in which:
Figure 1 is a diagram of an IPv6 unique local address (ULA), according to an example embodiment of the present invention;
Figure 2 is a diagram an example link using an IPV6 link local address according to an example embodiment of the present invention;
Figure 3 is a diagram of an example site using an IPv6 ULA according to an example embodiment of the present invention;
Figure 4 is a flowchart of a method of generating an IPv6 ULA according to an example embodiment of the present invention;
Figure 5 is a flowchart of a method of generating an IPv6 ULA according to another example embodiment of the present invention;
Figure 6A is a diagram of a EUI-64 of an interface device according to another example embodiment of the present invention;
Figure 6B is a diagram of a modified EUI-64 using the EUI-64 according to another example embodiment of the present invention;
Figure 7A is a diagram of a MAC address according to another example embodiment of the present invention; and
Figure 7B is a diagram of a modified EUI-64 using the MAC address according to another example embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

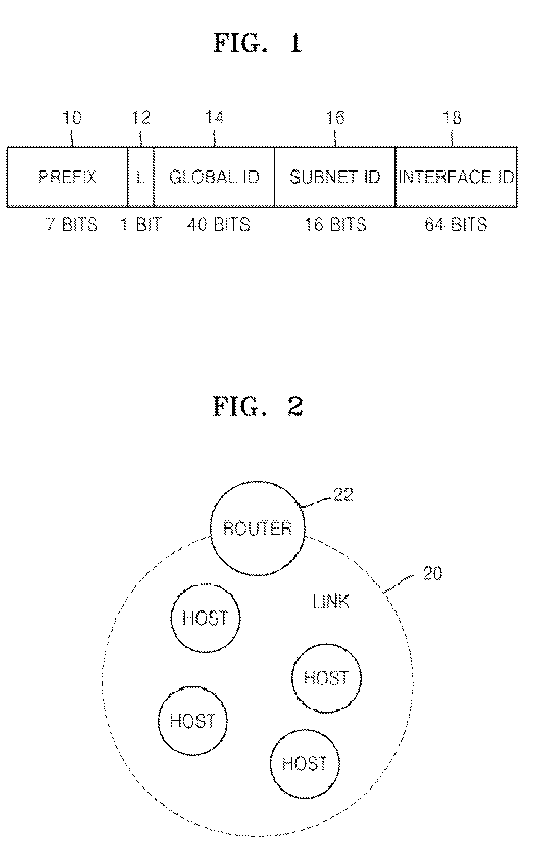

Figure 1 is a diagram of an IPv6 ULA, according to an example embodiment of the present invention. Referring to Figure 1, the IPv6 ULA is part of a header in a data packet for transmission in a network. The IPv6 ULA comprises a prefix 10, an L bit 12, a global ID 14, a subnet ID 16, and an interface ID 18.

The prefix 10, the L bit 12, the global ID 14, and the subnet ID 16 constitute a 64-bit ULA prefix. The ULA prefix is an IPv6 prefix in the IPv6 ULA. Therefore, the IPv6 ULA of the current embodiment of the present invention meets the requirement that an IPv6 address comprises the IPv6 prefix and the interface ID 18.

The prefix 10 indicates that an address a unique local address (ULA). The prefix 10 has a value of "FC00::/7" indicating that the prefix 10 has 7 bits and a value of "1111110" according to provisions defined in RFC 3513 for describing an IPv6 address. Meanwhile, an IPv6 link local address has a value of "FE80::/10" indicating that the prefix 10 has a value of "1111111010".

The L bit 12 indicates that the IPv6 prefix is designated at a local site. An IPv6 global address uses a global routing prefix allocated by an institute that manages the IPv6 address, whereas the IPV6 ULA is designated at the local site. Therefore, the L bit 12 has a value of 1.

The global ID 14 has a 40-bit value that may be generated using a method described below.

The subnet ID 16 indicates an ID of a subnet including a router (not shown) at a site where the IPv6 ULA is used and has a 16-bit value.

The interface ID 18 indicates an ID of a host device that receives an ULA prefix from the router and has a 64-bit value.

Figure 2 is a diagram of a link 20 that uses an IPv6 link local address. The link 20 is a part of a network comprising a router 22 and a plurality of hosts. Since the hosts can directly communicate data in the link 20, the hosts do not necessarily pass through the router 22. Therefore, the hosts communicate using the IPv6 link local address in the link 20.

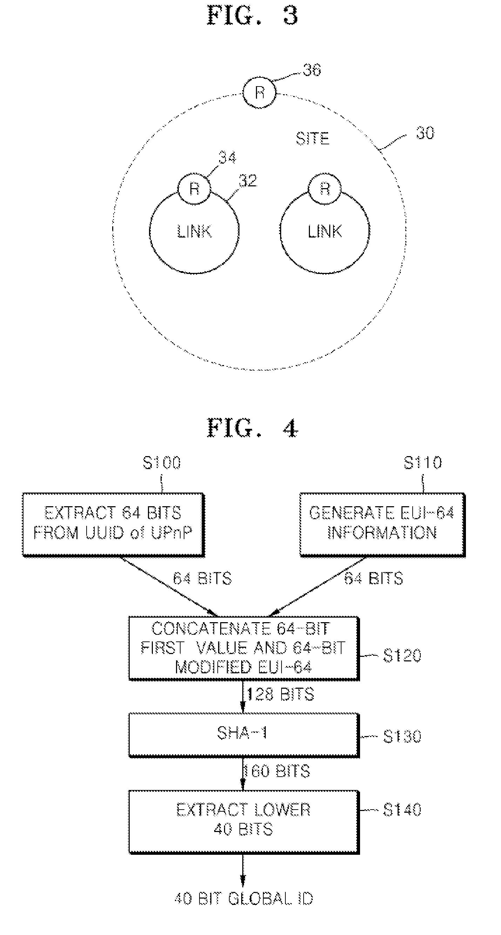

Figure 3 is a diagram of a site 30 that uses an IPv6 ULA. Referring to Figure 3, the site 30 comprises a plurality of links. The IPv6 ULA of the present invention is used in a site or a set of sites. For convenience, the IPv6 ULA that is used in the site 30 will now be described.

The site 30 can comprise a router 36 that connects networks inside and outside the site 30. When a host of a link 32 transmits data to a host of another link of the site 30, a router 34 of the link 32 including a transmission host checks a data packet and determines that the link 32 does not comprise a reception host. The router 34 transmits the data packet to external links. Therefore, an IPv6 link local address cannot be used to communicate data between the hosts that are included in the site 30 but are in different links. The IPv6 ULA is used to communicate data between the hosts.

Figure 4 is a flowchart of a method of generating an IPv6 ULA according to an example embodiment of the present invention. Referring to Figure 4, a 64-bit first value is generated using unique information on a universal plug and play (UPnP) device in a router (or other system) that generates the IPv6 ULA (Operation 100). According to the current embodiment, lower 64 bits are extracted from a universal unique identifier (UUID) of UPnP to generate the 64-bit first value. However, upper 64 bits or other 64 bits can be used to generate the 64-bit first value. Other aspects of the present invention that use non-UPnP devices may use other types of unique information to extract a unique identifier, such as a device serial number. Similarly, the method may be performed by any system needing to create an IPv6 ULA global prefix.

Since the method of generating the IPv6 ULA of the current embodiment of the present invention uses the unique information on the UPnP device instead of a value of a network time protocol (NTP), it is possible to generate the IPv6 ULA having uniqueness without using NTP. Further, the method of generating the IPv6 ULA can be applied using the NTP.

A router generates modified extended unique identifier (EUI)-64 information (Operation 110). The modified EUI-64 information is a 64-bit value generated using a EUI-64 of an interface device or a media access control (MAC) address, etc.

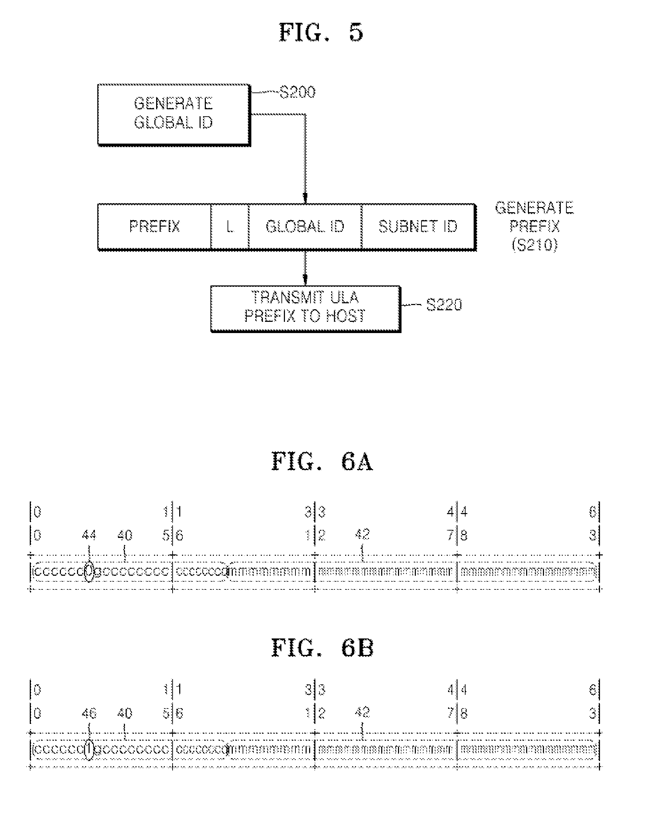

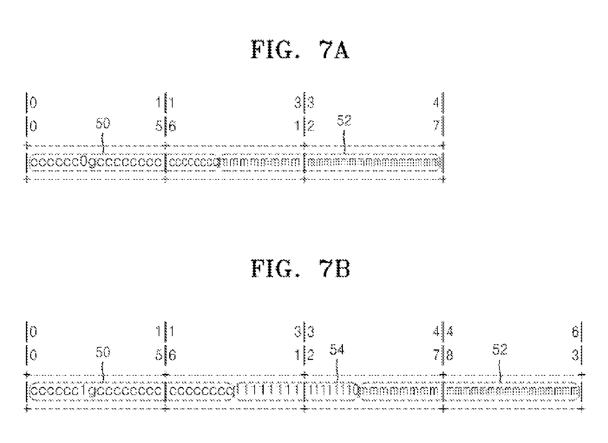

If the interface device has the EUI-64, the router (or other system) generates the modified EUI-64 using the EUI-64 of the interface device. If the interface device does not have the EUI-64, the router generates the modified EUI-64 using the MAC address of the router. Other aspects of the present invention may utilize other unique information of the router, such as a serial number, if the interface device does not have an EUI-64. The generation of the modified EUI-64 according to the present invention will be described with reference to Figures 6 and 7.

A 128-bit second value is generated using a concatenation of the 64-bit first value and the 64-bit modified EUI-64 (Operation 120).

Secure hash algorithm (SHA)-1 is applied to the 128-bit second value to generate a 160-bit third value (Operation 130). SHA-1 is an encoding algorithm developed by the National Institute of Standards and Technology (NIST). The SHA-1 reduces a 264-bit below message to a 160-bit message.

Lower 40 bits are extracted from the 160-bit third value to generate a global ID (Operation 140). However, the upper 40 bits or other 40 bits can be used to generate the global ID.

Figure 5 is a flowchart of a method of generating an IPv6 ULA according to another embodiment of the present invention. Referring to Figure 5, a router (or other system) generates a global ID using unique information on an UPnP device (or other device) and an interface device as illustrated in Figure 4 (Operation 200).

The router combines a prefix having a value of "FC00::/7", an L bit having a value of "1", the global ID, and a previously allocated subnet ID, and generates an ULA prefix (Operation 210).

The router transmits the generated ULA prefix to a host (Operation 220).

If a subnet uses IPv6 address automatic configuration, the router includes the ULA prefix in a router advertisement (RA) message and transmits the RA message to the host.

If the subnet uses a dynamic host configuration protocol version 6 (DHCPv6), the router includes the ULA prefix in a DHCPv6 option and transmits the DHCPv6 option to the host.

The host that receives the ULA prefix generates a 64-bit interface ID, combines the ULA prefix and the 64-bit interface ID, and generates the IPv6 ULA.

The IPv6 ULA is used after an address redundancy check process is performed. The address redundancy check process transmits a broadcasted message to devices in a link or a site.

Figure 6A is a diagram of an EUI-64 of an interface device. Figure 6B is a diagram of a modified EUI-64 using the EUI-64. Referring to Figure 6A, the modified EUI-64 is generated when the interface device has an EUI-64.

The EUI-64 of the interface device comprises a EUI-64 company ID 40 and a EUI-64manufacturer-selected extension identifier 42. The EUI-64 company ID 40 is a 24-bit value of a company of the interface device allocated by the IEEE registration institute. The EUI-64manufacturer-selected extension identifier 42 is a value that the company of the interface device, such as the interface device's manufacturer, allocates to the interface device. Therefore, the EUI-64 of the interface device has a sole value.

A seventh bit 44 of the EUI-64 company ID 40 is a universal/local bit, as shown in Figure 6B. According to the current embodiment, the universal/local bit must be designated as 1 pursuant to the IEEE EUI-64 standard.

Therefore, if the interface device has the EUI-64, the EUI-64 illustrated in Figure 6A is selected as a temporary EUI-64, and a seventh bit of the temporary EUI-64 is designated as 1 (46).

Figure 7A is a diagram of a MAC address. Figure 7B is a diagram of a modified EUI-64 using the MAC address. Referring to Figure 7A, the modified EUI-64 is generated when an interface device does not have an EUI-64. According to other aspects of the present invention, other numbers unique to the router, such as a serial number, may be used if the interface device does not have an EUI-64.

The MAC address comprises a MAC company ID 50 and a MAC vendor supplied ID 52. The MAC company ID 50 is a 24-bit value that the IEE registration institute allocates to a company of the interface device. The MAC vendor supplied ID 52 is a value that the company of the interface device allocates to the interface device. Therefore, the MAC address of the interface device has a sole value.

Since the MAC address has a 48-bit value, 16 bits, i.e., a 2-octet value, is required to generate the 64-bit modified EUI-64. The 2-octet value is a fill-in octet 54. According to the current embodiment, the fill-in octet 54 having values of "FF" and "FE" is inserted into the MAC company ID 50 and the MAC vendor supplied ID 52 to generate a temporal EUI-64. Any value may be used for the fill-in octet.

If the interface device uses the MAC address, as when the interface device uses an EUI-64, a seventh bit value of the temporary EUI-64 is designated as "1".

Since a method of generating an IPv6 ULA according to the present invention uses a EUI-64 that is unique address of an interface device or a MAC address, a unique IPv6 ULA can be generated.

The invention can also be embodied as computer (including any device that has an information processing function) readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices.

According to a method and apparatus for generating an IPv6 ULA according to the present invention, a global ID is generated using unique information on an UPnP device and an interface device and the IPv6 ULA is generated using the global ID, thereby generating the IPv6 ULA having uniqueness in an entire IPv6 address system without an NTP.

While there have been illustrated and described what are considered to be example embodiments of the present invention, it will be understood by those skilled in the art and as technology develops that various changes and modifications, may be made, and equivalents may be substituted for elements thereof without departing from the true scope of the present invention. Many modifications, permutations, additions and subcombinations may be made to adapt the teachings of the present invention to a particular situation without departing from the scope thereof. For example, any unique identifier of a system or interface device may be used in place of the UPnP identifier and the EUI-64/MAC address. Similarly, the methods may be performed by any system needing to generate an IPv6 ULA or a component of an IPv6 ULA. In addition, it is intended that the processes described herein, including those shown in Figure 4 and Figure 5, be broadly interpreted as being equivalently performed by software, hardware, or a combination thereof. Hardware modules may include a field programmable gate array (FPGA) or an application specific integrated circuit (ASIC). Software modules can be written in a variety of software languages, including C, C++, Java, Visual Basic, and others. Accordingly, it is intended, therefore, that the present invention not be limited to the various example embodiments disclosed, but that the present invention includes all embodiments falling within the scope of the appended claims.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of generating an IPv6 unique local address (ULA) comprising:
generating a 64-bit first value (S100) using first unique information related to a network device;
generating a modified 64-bit extended unique identifier (EUI-64) (S110) using second unique information;
generating a 128-bit second value (120) by concatenating the 64-bit first value and the modified EUI-64;
generating a 160-bit third value (S130) by applying secure hash algorithm-1 (SHA-1) to the 128-bit second value; and
generating a global ID (S140) by extracting 40 bits from the 160-bit third value.

2. The method according to claim 1, wherein the 64-bit first value is generated by a universal plug and play (UpnP) device used by the network device, and is the lower 64 bits of a universal unique identifier (UUID) of the UPnP device.

3. The method of claim 1 or 2, wherein the the modified EUI-64 is generated by an interface device used by the network device, and comprises:
selecting the EUI-64 of the interface device as a temporarary EUI-64 if the interface device has an EUI-64; and
designating the seventh bit value among the bits comprising the temporal EUI-64 as 1 .

4. The method of claim 1, 2 or 3 further comprising:
generating a 64-bit ULA prefix using the global ID address and a subnet ID of a subnet including the network device; and
transmitting the ULA prefix to a host included in the subnet.

5. The method of claim 4, wherein the transmitting of the ULA prefix to the host comprises:
transmitting a router advertisement (RA) message including the ULA prefix to the host.

6. The method according to claim 1, wherein the modified EUI-64 is generated by an interface device used by the network device, and comprises:
generating a temporary EUI-64 using a media access control (MAC) address of the router if the interface device does not have the EUI-64; and
designating the seventh bit value among the bits comprising the temporary EUI-64 as 1.

7. The method according to any of claims 4 to 6, wherein the transmitting of the ULA prefix to the host comprises:
transmitting a Dynamic Host Configuration Protocol version 6 (DHCPv6) option including the ULA prefix to the host.

8. A computer readable medium storing a computer readable program arranged to execute the method of any of claims 1 to 7.

9. A network device for generating an IPv6 unique local address (ULA) comprising:
a first value generator to generate a 64-bit first value using unique information related to the network device;
a modified EUI-64 generator to generate a modified EUI-64;
a second value generator to generate a 128-bit second value by concatenating the 64-bit first value and the modified EUI-64;
a SHA-1 application unit to generate a 160-bit third value by applying SHA-1 to the 128-bit second value; and
a global ID generator to generate a global ID by extracting 40 bits from the 160-bit third value.

10. The network device according to claim 9, wherein the 64-bit first value is the lower 64 bits of a universal unique identifier (UUID) of a UPnP device of the network device.

11. The network device according to claim 9 or 10, wherein the modified EUI-64 generator comprises:
a temporary EUI-64 generator to generate a temporal EUI-64 using the EUI-64 of an interface device of the network device or a MAC address of the network device according to whether the interface device has the EUI-64; and
a bit value designator to designate a seventh bit value among bits comprising the temporal EUI-64 as 1.

12. The network device according to claim 9, 10 or 11, further comprising:
a ULA prefix generator to generate a 64-bit ULA prefix using the global ID address and a subnet ID of a subnet including the network device; and
a ULA prefix transmitter to transmit the ULA prefix to a host included in the subnet.

13. The network device according to claim 12, wherein the ULA prefix transmitter comprises:
a RA transmitter to transmit a RA message including the ULA prefix to the host.

14. The network device according to claim 12 or 13, wherein the ULA prefix transmitter comprises:
a DHCPv6 transmitter to transmit a DHCPv6 option including the ULA prefix to the host.
